## Europäisches Patentamt

## European Patent Office

## Office européen des brevets

(19)

(11) Veröffentlichungsnummer: **0 221 575**
**B1**

(12)

# EUROPÄISCHE PATENTSCHRIFT

(45) Veröffentlichungstag der Patentschrift:
25.04.90

(51) Int. Cl.⁴: **F24J 2/02**, F24C 9/00

(21) Anmeldenummer: 86115493.8

(22) Anmeldetag: 08.11.86

(54) Heiz- und/oder Kochvorrichtung mit einem Wärmespeicherblock.

(30) Priorität: 08.11.85 DE 3539624
13.12.85 DE 3544039

(43) Veröffentlichungstag der Anmeldung:
13.05.87 Patentblatt 87/20

(45) Bekanntmachung des Hinweises auf die Patenterteilung:
25.04.90 Patentblatt 90/17

(84) Benannte Vertragsstaaten:
ES GR LI

(56) Entgegenhaltungen:
DE-A- 3 120 520
DE-A- 3 226 782
GB-A- 2 032 613
US-A- 4 273 100

PATENT ABSTRACTS OF JAPAN, Band 8,
Nr. 284 (M-348)[1721], 26. Dezember 1984; &
JP-A-59 153 071 (MATSUSHITA DENKI SANGYO
K.K.) 31-08-1984
MECHANICAL ENGINEERING, Band 94, Nr. 2,
Februar 1972, Seite 34; NASA Tech Briefs:
"Multichamber controllable heat pipe"

(73) Patentinhaber: Pöhlmann, Erich,
Wilhelm-Meussdörffer-Strasse 8a,
D-8650 Kulmbach(DE)
Patentinhaber: Stoy, Bernd, Dr.-Ing., Scharfenstein 6,
D-4030 Ratingen 8(DE)

(72) Erfinder: Pöhlmann, Erich,
Wilhelm-Meussdörffer-Strasse 8a,
D-8650 Kulmbach(DE)
Erfinder: Stoy, Bernd, Dr.-Ing., Scharfenstein 6,
D-4030 Ratingen 8(DE)

(74) Vertreter: Gesthuysen, Hans Dieter, Dipl.-Ing. et al,
Patentanwälte Gesthuysen + von Rohr
Huyssenallee 15 Postfach 10 13 33, D-4300 Essen 1(DE)

## Beschreibung

Die Erfindung betrifft eine Heiz- und/oder Kochvorrichtung nach dem ersten Teil von Anspruch 1.

Bei der bekannten Heiz- und/oder Kochvorrichtung, von der die Erfindung ausgeht (DE-A-3 226 782), führt ein Wärmerohr aus dem Wärmespeicherblock durch die Isolierung heraus zu einem Wärmeverbraucher in Form einer Kochplatte. Durch Anheben und Neigen der gesamten Vorrichtung oder durch Einstellung unterschiedlicher Neigungen des Wärmerohrs läßt sich die Wärmetransportleistung des Wärmerohrs steuern. Die Steuerung der Wärmetransportleistung durch Anheben und Neigen der gesamten Heiz- und/oder Kochvorrichtung ist nur in Grenzen in der Praxis anwendbar. Allerdings hat die bekannte Heiz- und/oder Kochvorrichtung den Vorteil eines besonders guten Wirkungsgrads, da im Wärmerohr zurücklaufende, kondensierte Flüssigkeit großflächig an der Innenwandung des Wärmerohrs verteilbar ist und damit großflächig eine Verdampfungsfläche benetzt.

Des weiteren ist eine Wasserheizvorrichtung bekannt (Patents Abstract of Japan, Band 8, Nr. 284 (M-348) 1721 vom 26. Dezember 1984 betreffend JP-A 59-153.071) mit einer Wärmequelle, einer als Wasserspeicher ausgeführten Wärmesenke, einem beide verbindenden, ansteigend geführten Wärmerohr mit Vorlaufkanal und Rücklaufkanal und einem Absperrventil im Rücklaufkanal. Bei dem zweikanalig ausgeführten Wärmerohr besteht zwischen Vorlaufkanal und Rücklaufkanal kein Unterschied, durch den eine irgendwie geartete Strömungsverteilung bewirkt würde. Dieses Wärmerohr ist im übrigen vollständig zweikanalig gestaltet, insbesondere führt der Rücklaufkanal direkt ans unterste Ende des Wärmerohrs zurück, so daß der dort vorhandene, darüber angeordnete Wärmetauscher, der das Heizelement darstellt, die hier vorhandene Flüssigkeit nur vom unteren Ende des Wärmerohrs ausgehend verdampfen kann.

Ausgehend von dem eingangs erläuterten Stand der Technik liegt der Erfindung die Aufgabe zugrunde, die bekannte Heiz- und/oder Kochvorrichtung bei unverändert gutem Wirkungsgrad hinsichtlich der Temperatursteuerung der Wärmeverbrauchers praxisgerecht zu verbessern und zu vereinfachen.

Die zuvor aufgezeigte Aufgabe ist bei einer Heiz- und/oder Kochvorrichtung mit den Merkmalen des ersten Teils von Anspruch 1 durch die Merkmale des kennzeichnenden Teils von Anspruch 1 gelöst.

Erfindungsgemäß wird mittels eines Steuerorgans die Wärmetransportleistung des Wärmerohrs unabhängig von seiner Neigung beeinflußt. Damit ist eine neigungsunabhängige Steuerung der Temperatur des Wärmeverbrauchers gewährleistet. Gleichzeitig wird durch die Aufteilung in Vorlaufkanal und Rücklaufkanal nicht nur ein Wärmetransportkreislauf, sondern auch ein Kreislauf im mechanischen Sinne verwirklicht, was den Wirkungsgrad der Gesamtanordnung weiter erhöht und die Steuerbarkeit verbessert. Die geschickte Führung des Wärmerohrs bzw. die entsprechende Dimensionierung des Rücklaufkanals führt dazu, daß Flüssigkeit stets in den Rücklaufkanal hinabläuft, jedoch Dampf nur im Vorlaufkanal aufsteigt, aber nicht oder zumindest praktisch nicht im Rücklaufkanal. Die beiden Strömungen stören sich also gegenseitig nicht und es findet kein Wärmeaustausch zwischen Dampf und Flüssigkeit in diesem Bereich statt, sondern nur dort, wo das wärmetechnisch gewünscht ist, nämlich am unteren bzw. oberen Ende des Wärmerohrs. Damit nun aber die Benetzung des unteren Endes des Wärmerohrs, das in den Wärmespeicherblock eintaucht, mit rücklaufender Flüssigkeit an der Innenwandung unverändert großflächig erfolgt, ist erfindungsgemäß die zweikanalige Gestaltung des Wärmerohrs im unteren, in den Wärmespeicherblock eintauchenden Bereich aufgehoben.

Insgesamt gelingt es so, bei unverändert gutem Wirkungsgrad die Temperatursteuerung erheblich zu verbessern und zu vereinfachen.

Das Steuerorgan ist erfindungsgemäß im Vorlaufkanal oder im Rücklaufkanal angeordnet. Die, als vorzugsweise herausgestellte, Anordnung des Steuerorgans im Rücklaufkanal hat ergänzend den Vorteil, daß wegen des regelmäßig geringeren Durchmessers des Rücklaufkanals das Steuerorgan so klein und damit so billig wie irgend denkbar ausgeführt werden kann. Außerdem hat diese Konstruktion den Vorteil, daß bei heißem Wärmespeicherblock aber keiner oder nur geringer Wärmeabgabe über den Wärmeverbraucher alle Flüssigkeit im Kopfbereich des Wärmerohrs gesammelt wird. Dies ist die kälteste Stelle der Gesamtanordnung. Dadurch ist das Wärmerohr in diesem Zustand nur einem geringen Innendruck ausgesetzt. Der durch die Verdampfung der Flüssigkeit auftretende hohe Innendruck tritt nur im tatsächlichen Betrieb, also bei Wärmeabgabe über den Wärmeverbraucher auf.

Es gibt nun eine Vielzahl von Möglichkeiten, die zuvor grundsätzlich erläuterte Lehre der Erfindung auszugestalten und weiterzubilden. Diese Möglichkeiten werden in Verbindung mit der nachfolgenden Erläuterung bevorzugter Ausführungsbeispiele anhand der Zeichnung näher erläutert. In der Zeichnung zeigt

Fig. 1 schematisch und im Schnitt ein Ausführungsbeispiel einer erfindungsgemäßen Heiz- und/oder Kochvorrichtung,

Fig. 2 in vergrößerter Darstellung, schematisch ein Wärmerohr mit Steuerventil für die Heiz- und/oder Kochvorrichtung gemäß Fig. 1,

Fig. 3 in Fig. 1 entsprechender Darstellung ein weiteres Ausführungsbeispiel einer Heiz- und/oder Kochvorrichtung,

Fig. 4 in vergrößerter Darstellung, sehr schematisch, den unteren Bereich eines Wärmerohrs eines bevorzugten Ausführungsbeispiels und

Fig. 5 ein drittes Ausführungsbeispiel einer Heiz- und/oder Kochvorrichtung in Fig. 1 ähnlicher Darstellung.

Die Heiz- und/oder Kochvorrichtung weist zunächst einen von einer thermischen Isolierung 1 umgebenen Wärmespeicherblock 2 auf. Als Speichermedium für den Wärmespeicherblock 2 kommen entsprechende Flüssigkeiten, Salze mit geeignetem Schmelzpunkt usw. ebenso in Frage, wie als Wärmespeichermedium bekannte Feststoffe, also Keramiken, Speichersteine, Aluminium, Gußeisen od. dgl. In den dargestellten bevorzugten Ausführungsbeispielen handelt es sich beim Speichermedium um Salzmischungen mit geeignetem Schmelzpunkt. Als thermische Isolierung 1 kommen alle Arten üblicher Isolierstoffe in Frage, die natürlich die bei einer Kochvorrichtung erheblichen Temperaturen im Wärmespeicherblock aushalten müssen. Die Heiz- und/oder Kochvorrichtung weist ferner ein Heizelement 3 in dem Wärmespeicherblock 2 auf. Bei diesem Heizelement 3 kann es sich um eine elektrische Heizwendel od. dgl. handeln, in den dargestellten bevorzugten Ausführungsbeispielen handelt es sich jedoch um das obere Ende eines Wärmerohrs, das im übrigen mit einer Absorber- und Kollektorfläche 4 eines Solarkollektors verbunden ist. Dies ist für sich bekannt, so daß insoweit auf die Veröffentlichungen im Stand der Technik verwiesen werden darf.

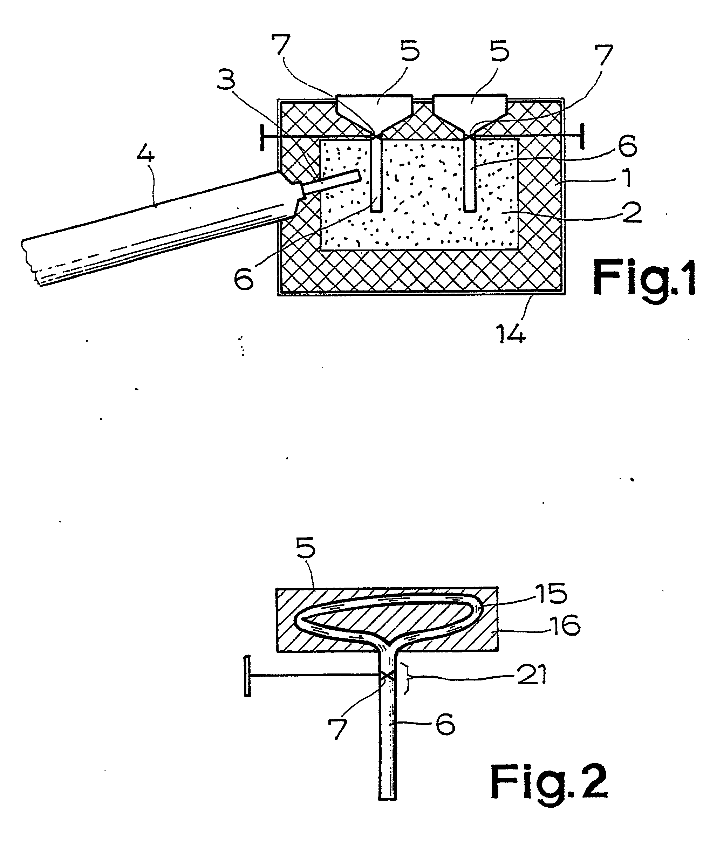

Fig. 1 zeigt, daß die hier dargestellte Ausführungsform einer Kochvorrichtung zwei Wärmeverbraucher 5 in Form von Kochplatten aufweist, die beide in die Isolierung 1 eingebettet sind. Anstelle von Kochplatten als Wärmeverbraucher 5 kommt natürlich auch ein Backofen, ggf. aber auch ein separates Kochgeschirr, also eine Kochplatte und Geschirr vereinigendes Element, in Frage. Als Heizvorrichtung ausgeführt könnte die Heiz- und/oder Kochvorrichtung als Wärmeverbraucher auch einen Heizradiator od. dgl. aufweisen. Auch hierzu kann auf den in der Einleitung der vorliegenden Beschreibung genannten Stand der Technik verwiesen werden.

Vom Wärmespeicherblock 2 geht ein Wärmerohr 6 aus, das durch die Isolierung 1 zum Wärmeverbraucher 5 geführt ist. Im in Fig. 1 dargestellten Ausführungsbeispiel ist das Wärmerohr 6 wegen der Einbettung des Wärmeverbrauchers 5 in die Isolierung 1 selbst gänzlich im Wärmespeicherblock 2 und in der Isolierung 1 geführt. Die Wärmetransportleistung des Wärmerohrs 6 ist mittels eines Steuerorgans 7 steuerbar, das im hier dargestellten Ausführungsbeispiel mechanisch ausgeführt ist. Das Wärmerohr ist vom Wärmespeicherblock 2 zum Wärmeverbraucher 5 hin ansteigend, im dargestellten Ausführungsbeispiel im wesentlichen senkrecht geführt. Mittels des Steuerorgans 7 ist die Dampf-/Flüssigkeitsströmung im Wärmerohr 6 steuerbar, dadurch wird dann ohne eine Änderung der Neigung des Wärmerohrs 6 auch die Wärmetransportleistung des Wärmerohrs 6 gesteuert.

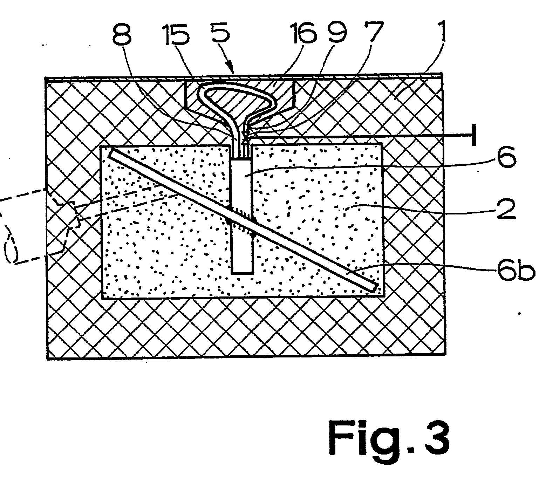

Während die Fig. 1, 2 und 5, lediglich zur Darstellung des grundsätzlichen Aufbaues in einer solchen Vorrichtung, im Grundsatz normale Wärmerohre 6 zeigen, also Wärmerohre 6, bei denen die Dampf-/Flüssigkeitsströmung in einem Raum gegenläufig erfolgt, zeigt Fig. 3 ein weiter bevorzugtes Ausführungsbeispiel, bei dem das Wärmerohr 6 zweikanalig ausgeführt ist, nämlich einen lediglich eine Dampfströmung nach oben erlaubenden Vorlaufkanal 8 und einen dazu im wesentlichen parallelen, lediglich eine Flüssigkeitsströmung nach unten erlaubenden Rücklaufkanal 9 aufweist. Mit dieser Konstruktion wird ein Kreislauf auch im mechanischen Sinne verwirklicht, was den Wirkungsgrad der Gesamtanordnung erhöht und die Steuerbarkeit verbessert. Wichtig ist dabei, daß im oberen Bereich . des zweikanalig ausgeführten Wärmerohrs 6 der höchste Punkt oberhalb des Vorlaufkanals 8 zu finden ist und daß das Wärmerohr 6 von dort aus sogleich zum Rücklaufkanal 9 hin abfällt.

Die Förderung lediglich einer Dampfströmung im Vorlaufkanal 8 und einer Flüssigkeitsströmung im Rücklaufkanal 9 kann durch entsprechende Rückschlagventile, Ableitbleche, Filter od. dgl. verwirklicht werden. Bei dem in Fig. 3 dargestellten Ausführungsbeispiel wird die Verteilung der Dampfströmung nach unten auf den Rücklaufkanal 9 aber nicht durch Rückschlagventile od. dgl. verwirklicht, sondern lediglich dadurch, daß einerseits der höchste Punkt des Wärmerohrs 6 oberhalb des Vorlaufkanals 8 vorgesehen ist und das Wärmerohr 6 von dort aus sogleich zum Rücklaufkanal 9 hin abfallend geführt ist und daß andererseits der Strömungsquerschnitt des Rücklaufkanals 9 klein ist. Genau gesagt ist im dargestellten Ausführungsbeispiel der Strömungsquerschnitt des Rücklaufkanals 9 kapillarartig klein, beträgt nämlich der Durchmesser des Rücklaufkanals 9 etwa 3 mm. Befindet sich im Rücklaufkanal 9 rücklaufende Flüssigkeit, was praktisch immer der Fall sein wird, so ist der Rücklaufkanal 9 effektiv für eine Dampfströmung nach oben blockiert. Die geschickte Führung des Wärmerohrs 6 über den höchsten Punkt oberhalb des Vorlaufkanals 8 führt demgegenüber dazu, daß Flüssigkeit stets in den Rücklaufkanal 9 hinabläuft.

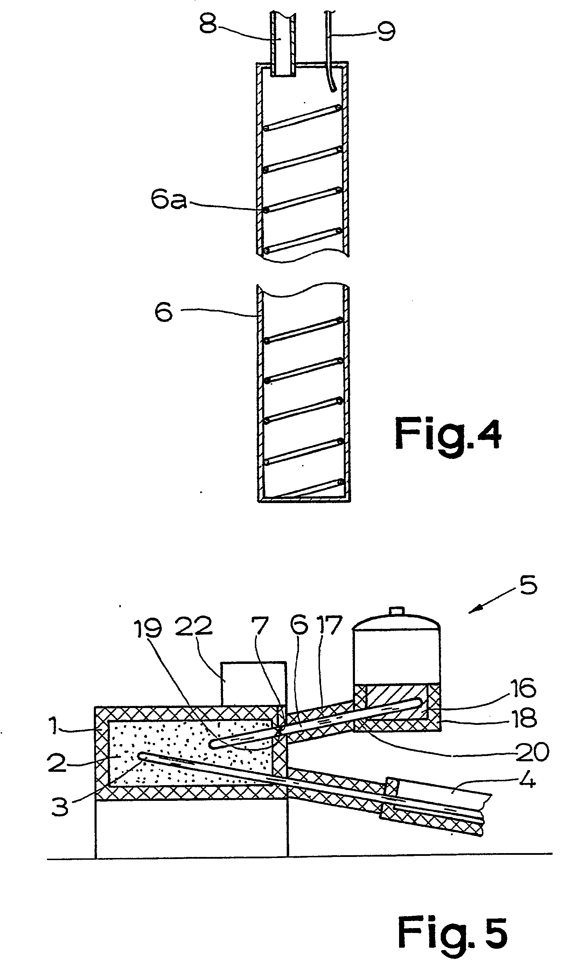

Fig. 3 zeigt im übrigen, daß die Aufteilung des Wärmerohrs 6 in Vorlaufkanal 8 und Rücklaufkanal 9 noch im Wärmespeicherblock 2, aber erst knapp unterhalb der Isolierung 1 erfolgt. Entsprechendes zeigt Fig. 4 in vergrößerter Darstellung. Das in Fig. 4 gezeigte untere Ende des Wärmerohrs 6 hat im dargestellten Ausführungsbeispiel einen Durchmesser von ca. 25 bis 40 mm, vorzugsweise von ca. 30 mm, der nach oben abgehende Vorlaufkanal 8 hat einen Durchmesser von ca. 10 mm. Alle Teile des Wärmerohrs 6 bestehen aus Kupfer, eine Füllung von ca. 15 p Wasser befindet sich im hier dargestellten Ausführungsbeispiel im Inneren des Wärmerohrs 6.

Fig. 3 zeigt ferner noch ein bevorzugtes Ausführungsbeispiel, als hier das Steuerorgan 7 nicht im Vorlaufkanal 9, sondern im Rücklaufkanal 9 angeordnet ist. Dadurch kann bei der hier dargestellten Ausführungsform das Steuerorgan 7 so klein und damit so billig wie irgend denkbar ausgeführt werden. Im übrigen hat diese Konstruktion den Vorteil, daß sich bei heißem Wärmespeicherblock 2 aber keiner oder nur sehr geringer Wärmeabgabe über die Wärmeverbraucher 5 alle Flüssigkeit im Kopfbereich des Wärmerohrs 6, also an der kältesten Stelle sammelt und vom Steuerorgan 7 daran gehindert wird, im Rücklaufkanal 9 nach unten zurückzulaufen. Dadurch ist das Wärmerohr 6 in diesem Zustand nur einem geringen Innendruck ausgesetzt, der durch die Verdampfung der Flüssigkeit erst auftretende hohe Innendruck im Wärmerohr 6 tritt nur im tatsächlichen Betrieb, also bei Wärmeabgabe über die Wärmeverbraucher 5 auf.

Die Fig. 1 bis 5 machen im Zusammenhang deutlich, daß hier das Steuerorgan 7 direkt unter dem Wärmeverbraucher 5, vorzugsweise noch in der Isolierung 1, angeordnet ist. Das trägt der Tatsache Rechnung, daß eine Anordnung des Steuerorgans 7 im Wärmespeicherblock 2 unter Umständen eine Leck-Wärmeströmung am Steuerorgan 7 vorbei zur Folge hätte.

Während in Fig. 1 die Isolierung 1 ihrerseits noch von einem aus Blech od. dgl. bestehenden Gehäuse 14 umgeben ist, ist in Fig. 3 die Isolierung 1 als Integralisolierung ausgeführt, also auf der Außenseite so widerstandsfähig, daß es eines zusätzlichen Gehäuses nicht bedarf.

Fig. 2 zeigt, daß das dem Wärmeverbraucher 5 zugewandte Ende des Wärmerohrs 6 in einer Schleife 15 geführt ist. Die Führung des Wärmerohrs 6 in einer Schleife 15 hat eine bessere Wärmeverteilung im Wärmeverbraucher 5 zur Folge. Die Ausgestaltung der Schleife 15 am Ende des Wärmerohrs 6 kann im übrigen sogar so erfolgen, daß sich eine Art Heizspirale ergibt, wie sie bei bekannten elektrisch beheizten Kochplatten für ein besonders schnelles Aufheizen bekannt ist.

Wie die Fig. 2 und 3 ferner zeigen, ist es hinsichtlich des Wirkungsgrades besonders zweckmäßig, daß das dem Wärmeverbraucher 5 zugewandte und zugeordnete Ende des Wärmerohres 6 in eine den Wärmeverbraucher 5 selbst darstellende Platte 16 integriert ist. In den dargestellten Ausführungsbeispielen ist die Platte 16 aus Aluminium hergestellt und das Ende des Wärmerohrs 6 ist in die Platte 16 eingegossen. Im übrigen sind in zweckmäßiger Weise auch andere Mittel, beispielsweise Wärmeüberleitbleche od. dgl. zur Verbesserung des Wärmeübergangs vom Wärmerohr 6 auf den Wärmeverbraucher 5 vorzusehen. Zuvor ist erläutert worden, daß das Wärmerohr 6 bevorzugt aus Kupfer besteht. Untersuchungen haben ergeben, daß man Kupfer durchaus mit Aluminium verlöten und auch Aluminium ohne weiteres auf Gußeisen befestigen kann.

Fig. 4 zeigt noch eine Besonderheit der Erfindung im unteren Bereich des Wärmerohrs 6, da dort eine ein Rücklaufen von Flüssigkeit begünstigende Spirale 6a an der Innenwandung angeordnet ist. Damit ergibt sich eine Rücklaufhilfe für die Flüssigkeit, die natürlich auch auf andere Arten geschaffen werden kann.

Fig. 3 zeigt im übrigen noch, daß das Wärmerohr 6 im im Wärmespeicherblock 2 befindlichen Bereich mit einem großflächigen Wärmeaufnahmeblech 6b verbunden ist. Im hier dargestellten Ausführungsbeispiel ist das Wärmeaufnahmeblech 6b als im Wärmespeicherblock 2 schräg angeordnete Aluminiumplatte mit einem Durchmesser von ca. 10 mm, gelocht, ausgeführt. Angedeutet ist, daß das Wärmeaufnahmeblech 6b an einem Ende unmittelbar mit einem den Wärmespeicherblock 2 speisenden Wärmerohr od. dgl. verbunden sein kann.

Das in Fig. 5 dargestellte weitere Ausführungsbeispiel einer Heiz- und/oder Kochvorrichtung zeigt zunächst ein besonderes Ausführungsbeispiel eines Wärmeverbrauchers 5, nämlich einen in Form eines Kochgeschirrs mit integriertem Kochtopf ausgeführtem Wärmeverbraucher 5. Wesentlich ist hier nun, daß der Wärmeverbraucher 5 als von dem Wärmespeicherblock 2 mit der Isolierung 1 getrennt ausgebildete Einheit ausgeführt und über das Wärmerohr 6 mit dem Wärmespeicherblock 2 verbunden ist. Im hier dargestellten Ausführungsbeispiel ist dazu das Wärmerohr 6 mit einer integrierten Isolierung 17 versehen, um Wärmeverluste auf dem Stück zwischen der Isolierung 1 und dem Wärmeverbraucher 5 zu vermeiden. Der Wärmeverbraucher 5 selbst ist ebenfalls mit einer Isolierung 18 versehen. Im übrigen zeigt Fig. 5 insoweit ein besonders bevorzugtes Ausführungsbeispiel als der Wärmespeicherblock 2 samt Isolierung 1 eine Öffnung 19 zum Einstecken des Wärmerohrs 6 aufweist und das Wärmerohr 6 wahlweise in diese Öffnung 19 einsteckbar ist. In ähnlicher Weise weist im dargestellten Ausführungsbeispiel auch der hier als Kochgeschirr ausgeführte Wärmeverbraucher 5 eine Öffnung 20 zum Einstecken des zugeordneten Endes des Wärmerohrs 6 auf. Letztlich ist also die hier dargestellte Heiz- und/oder Kochvorrichtung zum Teil zerlegbar.

Zuvor ist ganz generell nur von einem Steuerorgan 7 für die Wärmetransportleistung des Wärmerohrs 6 die Rede gewesen. Wie dieses Steuerorgan 7 im einzelnen auszugestalten ist, wird sich für einen Fachmann aus der einschlägigen Fachliteratur ermitteln lassen. Im hier dargestellten und bevorzugten Ausführungsbeispiel ist jedenfalls das Steuerorgan 7 als Ventil, und zwar als Stellventil, ausgeführt. Grundsätzlich könnte das Ventil auch als Auf-/Zu-Ventil ausgeführt sein, das bedarf aber besonderer, später noch zu erläuternder steuerungstechnischer Maßnahmen, um dann eine steuerbare Wärmetransportleistung des Wärmerohrs 6 zu verwirklichen. Beispiele für hier einsetzbare Ventile finden sich in der Fachliteratur für Kältemaschinen (Lueger "Lexikon der Technik", Band 16 "Lexikon der Verfahrenstechnik", DVA Stuttgart 1979, Seite 398f).

Grundsätzlich kann ein als Steuerorgan dienendes Stellventil 7 hahnartig ausgeführt sein, was besonders gut zu einem Drehknopf als Betätigungselement korrespondiert. Möglicherweise ist es für ein Wärmerohr 6 als Wärmetransportelement aber besonders zweckmäßig, dieses mit einem im Durchflußquerschnitt einstellbaren Ventilabschnitt 21 zu versehen. Beispielsweise kann, wie die Fig. 1 und 2 zeigen, die Wandung des Wärmerohrs 6 im Ventilabschnitt 21 aus elastischem Material bestehen, so daß die Steuerung der Wärmetransportleistung des Wärmerohrs 6 durch beispielsweise ringförmiges Zusammenquetschen der Wandung im Ventilabschnitt 21 erfolgen kann.

In den in den Fig. 1 bis 3 dargestellten Ausführungsbeispielen erfolgt die Steuerung des Steuerorgans 7 bzw. Stellventils 7 mechanisch, nämlich mittels eines Drehknopfs od. dgl. Schon damit ist es möglich, bei entsprechender Ausgestaltung des Steuerorgans 7 bzw. Stellventils 7 eine spezielle Kennlinie hinsichtlich des Steuerverhaltens zu verwirklichen. Beispielsweise kann nach einem anfänglich schnellen Aufheizen mit hoher Wärmetransportleistung zum Weiterkochen die Wärmetransportleistung zurückgenommen werden. Besonders zweckmäßig ist es in diesem Zusammenhang, eine elektrische bzw. elektronische Steuereinrichtung 22 für das Steuerorgan 7 vorzusehen, wie das Fig. 5 zeigt. Selbstverständlich muß das Steuerorgan 7 bzw. Stellventil 7 dann entsprechend steuerbar sein, beispielsweise kann es sich um ein elektromagnetisches oder elektromechanisches oder auch ein elektropneumatisches Steuerorgan 7 handeln. Wesentlich ist, daß eine elektrische bzw. elektronische Steuereinrichtung 22 eine Vielzahl von steuerungstechnischen Möglichkeiten bietet. So kann hier beispielsweise mittels eines Temperatursensors im Wärmeverbraucher 5 eine vollständige Regelschaltung realisiert werden, so daß durch die Steuerung der Wärmetransportleistung des Wärmerohrs 6 der Wärmeverbraucher 5 immer auf der gleichen Temperatur gehalten wird. Auch ist in Verbindung mit einer an sich bekannten Schaltuhr eine spezielle zeitabhängige Kennlinie für die Temperatur des Wärmeverbrauchers 5 realisierbar, beispielsweise um sehr schnell auf eine sehr hohe Temperatur aufzuheizen und danach die Temperatur zum Weiterkochen für eine bestimmte Zeit zurückzunehmen. Mittels einer elektrischen bzw. elektronischen Steuereinrichtung 22 kann auch erreicht werden, daß in Verbindung mit einem Temperaturfühler im Wärmespeicherblock 2 ein Absinken der Temperatur im Wärmespeicherblock 2 unter einen bestimmten unteren Grenzwert Berücksichtigung findet. In diesem Fall kann entweder der Wärmeverbraucher 5 "abgeschaltet" werden und/oder das Heizelement 3 wird zusätzlich eingeschaltet, beispielsweise bei einem als elektrische Heizwendel ausgeführten Heizelement 3 wird zwischenzeitlich mit relativ teurem Tagstrom nachgeheizt. Es ergibt sich dabei zusätzlich, daß es zweckmäßig sein kann, entsprechende Anzeigen der Funktion in der Steuereinrichtung 22 vorzusehen.

Eine elektrische bzw. elektronische Steuereinrichtung 22 bietet bei einem als Ventil ausgeführten Steuerorgan 7 die Möglichkeit, dieses impulsartig zu öffnen und zu schließen. Eine solche impulsartige Öffnung und Schließung des Steuerorgans 7 erlaubt die Verwendung eines Auf/Zu-Ventils, wenngleich sie nicht allein mit einem Auf/Zu-Ventil realisierbar ist. Das Tastverhältnis zwischen geöffnetem und geschlossenem Steuerorgan 7 ergibt die resultierende Wärmetransportleistung.

Schließlich ist in den Figuren nicht dargestellt, daß dann, wenn es sich beim Heizelement um ein von einem Solarkollektor od. dgl. her in den Wärmespeicherblock geführtes Wärmerohr handelt, auch dieses Wärmerohr mit einem entsprechenden Steuerorgan zur Steuerung der Wärmetransportleistung versehen werden kann. Dadurch kann beispielsweise eine Überhitzung des Wärmespeicherblocks einfach durch "Abschalten" des Heizelements in Form des Wärmerohrs verhindert werden. Gerade in Verbindung mit einer elektronischen bzw. elektronischen Steuereinrichtung mit Temperaturfühler im Wärmespeicherblock ist dies eine zweckmäßige Ausgestaltung der Lehre der Erfindung.

## Patentansprüche

1. Heiz- und/oder Kochvorrichtung mit einem von einer thermischen Isolierung (1) umgebenen Wärmespeicherblock (2), einem Heizelement (3) in dem Wärmespeicherblock (2), mindestens einem ggf. in die Isolierung (1) eingebetteten Wärmeverbraucher (5) wie z.B. einer Kochplatte, einem Backofen, einem Heizradiator, einem Kochgeschirr, und einem vom Wärmespeicherblock (2) ausgehenden und durch die Isolierung (1) zum Wärmeverbraucher (5) hin ansteigend geführten Wärmerohr (6), dadurch gekennzeichnet, daß das Wärmerohr (6) zweikanalig ausgeführt ist, nämlich einen lediglich eine Dampfströmung nach oben erlaubenden Vorlaufkanal (8) und einen dazu im wesentlichen parallelen, lediglich eine Flüssigkeitsströmung nach unten erlaubenden Rücklaufkanal (9) aufweist, aber die Aufteilung des Wärmerohrs (6) in Vorlaufkanal (8) und Rücklaufkanal (9) noch im Wärmespeicherblock (2) aber erst knapp unterhalb der Isolierung (1) vorliegt, daß zur Verteilung der Dampfströmung nach oben auf den Vorlaufkanal (8) und der Flüssigkeitsströmung nach unten auf den Rücklaufkanal (9) der den Vorlaufkanal (8) mit dem Rücklaufkanal (9) verbindende Zweig des Wärmerohrs (6) vom höchsten Punkt des Vorlaufkanals (8) zum Rücklaufkanal (9) hin abfallend geführt ist und/oder der Strömungsquerschnitt des Rücklaufkanals (9) gegenüber dem Strömungsquerschnitt des Vorlaufkanals (8) klein ist, daß die Dampf-/Flüssigkeitsströmung im Wärmerohr (6) und damit die Wärmetransportleistung des Wärmerohrs (6) mittels eines Steuerorgans (7) steuerbar ist und daß das Steuerorgan (7) im Vorlaufkanal (8) oder, vorzugsweise, im Rücklaufkanal (9) angeordnet ist.

2. Heiz- und/oder Kochvorrichtung nach Anspruch 1, dadurch gekennzeichnet, daß zur Verteilung der Dampfströmung nach oben auf den Vorlaufkanal (8) und der Flüssigkeitsströmung nach unten auf den Rücklaufkanal (9) entsprechende Rückschlagventile (10, 11), Ableitbleche, Filter od. dgl. vorgesehen sind.

3. Heiz- und/oder Kochvorrichtung nach Anspruch 1, dadurch gekennzeichnet, daß der Strömungsquerschnitt des Rücklaufkanals (9) etwa 5 bis 9 mm², vorzugsweise etwa 7 mm², bzw. der Durchmesser ca. 3 bis 4 mm, vorzugsweise ca. 3 mm, beträgt.

4. Heiz- und/oder Kochvorrichtung nach einem der Ansprüche 1 bis 3, dadurch gekennzeichnet, daß das Steuerorgan (7) direkt unter dem Wärmeverbraucher (5), vorzugsweise noch in der Isolierung (1), angeordnet ist.

5. Heiz- und/oder Kochvorrichtung nach einem der Ansprüche 1 bis 4, dadurch gekennzeichnet, daß das dem Wärmeverbraucher (5) zugewandte und zugeordnete Ende des Wärmerohrs (6) in einer Schleife (15) geführt ist.

6. Heiz- und/oder Kochvorrichtung nach einem der Ansprüche 1 bis 5, dadurch gekennzeichnet, daß das dem Wärmeverbraucher (5) zugewandte und zugeordnete Ende des Wärmerohrs (6) in eine, vorzugsweise den Wärmeverbraucher (5) selbst darstellende, Platte (16) integriert, vorzugsweise in eine aus Aluminium bestehende Platte (16) eingegossen ist.

7. Heiz- und/oder Kochvorrichtung nach einem der Ansprüche 1 bis 6, dadurch gekennzeichnet, daß das Wärmerohr (6) aus Kupfer besteht.

8. Heiz- und/oder Kochvorrichtung nach einem der Ansprüche 1 bis 7, dadurch gekennzeichnet, daß an der Innenwandung des Wärmerohrs (6) eine ein Rücklaufen von Flüssigkeit begünstigende Spirale (6a) od. dgl. angeordnet ist.

9. Heiz- und/oder Kochvorrichtung nach einem der Ansprüche 1 bis 8, dadurch gekennzeichnet, daß das Wärmerohr (6) im im Wärmespeicherblock (2) befindlichen Bereich mit mindestens einem sich im Wärmespeicherblock (2) großflächig erstreckenden Wärmeaufnahmeblech (6b) od. dgl. verbunden ist.

10. Heiz- und/oder Kochvorrichtung nach einem der Ansprüche 1 bis 9, dadurch gekennzeichnet, daß der Wärmeverbraucher (5) als von dem Wärmespeicherblock (2) mit der Isolierung (1) getrennt ausgebildete Einheit ausgeführt und über das Wärmerohr (6) mit dem Wärmespeicherblock (2) verbunden ist.

11. Heiz- und/oder Kochvorrichtung nach Anspruch 10, dadurch gekennzeichnet, daß der Wärmespeicherblock (2) samt Isolierung (1) mindestens eine Öffnung (19) zum Einstecken des Wärmerohrs (6) aufweist und das Wärmerohr (6) wahlweise in die Öffnung (19) einsteckbar ist.

12. Heiz- und/oder Kochvorrichtung nach Anspruch 10 oder 11, dadurch gekennzeichnet, daß der Wärmeverbraucher (5) als Kochgeschirr, Bratgeschirr od. dgl. ausgeführt, und mit einer Öffnung (20) zum Einstecken des zugeordneten Endes des Wärmerohrs (6) versehen ist.

13. Heiz- und/oder Kochvorrichtung nach einem der Ansprüche 1 bis 12, dadurch gekennzeichnet, daß das Steuerorgan als Ventil, vorzugsweise als Stellventil (7), ausgeführt ist.

14. Heiz- und/oder Kochvorrichtung nach Anspruch 12, dadurch gekennzeichnet, daß das Stellventil (7) hahnartig ausgeführt ist.

15. Heiz- und/oder Kochvorrichtung nach Anspruch 14, dadurch gekennzeichnet, daß das Wärmerohr (6) einen im Durchflußquerschnitt einstellbaren Ventilabschnitt (21) aufweist und vorzugsweise die Wandung des Wärmerohrs (6) im Ventilabschnitt (21) aus elastischem Material besteht.

16. Heiz- und/oder Kochvorrichtung nach einem der Ansprüche 1 bis 15, dadurch gekennzeichnet, daß eine elektrische bzw. elektronische Steuereinrichtung (22) für das Steuerorgan (7) vorgesehen ist.

17. Heiz- und/oder Kochvorrichtung nach Anspruch 16, dadurch gekennzeichnet, daß das als Ventil ausgeführte Steuerorgan mittels der Steuereinrichtung impulsartig öffenbar und schließbar ist.

18. Heiz- und/oder Kochvorrichtung nach einem der Ansprüche 1 bis 17, dadurch gekennzeichnet, daß das Heizelement durch das obere Ende eines von einem Solarkollektor od. dgl. zum Wärmespeicherblock hin ansteigend geführten Wärmerohrs gebildet ist, daß für dieses Wärmerohr ein eigenes Steuerorgan für die Wärmetransportleistung vorgesehen ist, daß mittels des Steuerorgans die Dampf-/Flüssigkeitsströmung in diesem Wärmerohr steuerbar ist und daß das Steuerorgan vorzugsweise nahe dem Wärmespeicherblock, insbesondere in der den Wärmespeicherblock umgebenden Isolierung, angeordnet ist.

## Claims

1. A heating and/or cooking equipment with a heat storage block (2) surrounded by thermal insulation (1), a heating element (3) in the heat storage block (2), at least one heat consuming device (5) such as e.g. a cooking plate, baking oven, radiator or cooking utensils, possibly embedded in the insulation (1), and a heat tube (6) starting out from the heat storage block (2) and led upwards through the insulation (1) to the heat consuming device (5), characterized in that the heat tube (6) is constructed as two channels, namely an outward flow channel (8) only permitting a flow of steam upwards and a return flow channel (9) substantially in parallel with it and only permitting a flow of liquid downwards, but the division of the heat tube (6) into the outward flow channel (8) and the return flow channel (9) takes place still in the heat storage block (2) but only just below the insulation (1), that to apportation the flow of steam upwards to the outward flow channel (8) and the flow of liquid downwards to the return flow channel (9) the branch of the heat tube (6) that connects the outward flow channel (8) to the return flow channel (9) is led downwards from the highest point of the outward flow channel (8) towards the return flow channel (9) and/or the flow cross-section of the return flow channel (9) is small compared with the flow cross-section of the outward flow channel (8), that the flow of steam and liquid in the heat tube (6) and thereby the heat transport output of heat tube (6) can be controlled by means of a control unit (7) and that the control unit (7) is located in the outward flow channel (8) or, preferably, in the return flow channel (9).

2. A heating and/or cooking equipment according to Claim 1, characterized in that to apportion the flow of steam upwards to the outward flow channel (8) and the flow of liquid downwards to the return flow channel (9) appropriate non-return valves (10, 11), deflecting blades, filters or the like are provided.

3. A heating and/or cooking equipment according to Claim 1, characterized in that the flow cross-section of return flow channel (9) is about 5 to 9 mm², preferably about 7 mm², and the diameter amounts to about 3 to 4 mm, preferably about 3 mm.

4. A heating and/or cooking equipment according to one of Claims 1 to 3, characterized in that the control unit (7) is located directly below the heat consuming device (5), preferably in the insulation (1).

5. A heating and/or cooking equipment according to one of Claims 1 to 4, characterized in that the end of the heat tube (6) facing towards and associated with the heat consuming device (5) is formed in a loop (15).

6. A heating and/or cooking equipment according to one of Claims 1 to 5, characterized in that the end of the heat tube (6) facing towards and associated with the heat consuming device (5) is integrated in a plate (16), preferably playing the part of the heat consuming device (5) itself, and is preferably cast into a plate (16) consisting of aluminium.

7. A heating and/or cooking equipment according to one of Claims 1 to 6, characterized in that the heat tube (6) consists of copper.

8. A heating and/or cooking equipment according to one of Claims 1 to 7, characterized in that a spiral (6a) or the like, favouring the flow-back of liquid, is located on the inner wall of the heat tube (6).

9. A heating and/or cooking equipment according to one of Claims 1 to 8, characterized in that the portion of the heat tube (6) located in the heat storage block (2) is connected to a heat-absorbing sheet (6b) or the like, extending over a large area in the heat storage block (2).

10. A heating and/or cooking equipment according to one of Claims 1 to 9, characterized in that the heat consuming device (5) is constructed as a unit formed separately from the heat storage block (2) and the insulation (1) and is connected to the heat storage block (2) via the heat tube (6).

11. A heating and/or cooking equipment according to Claim 10, characterized in that the heat storage block (2) with the insulation (1) possesses at least one opening (19) to insert the heat tube (6), and the heat tube (6) can be inserted into the opening (19) at will.

12. A heating and/or cooking equipment according to Claim 10 or 11, characterized in that the heat consuming device (5) is constructed as a cooking utensil, baking utensil or the like, and is provided with an opening (20) to insert the associated end of the heat tube (6).

13. A heating and/or cooking equipment according to one of Claims 1 to 12, characterized in that the control unit is constructed as a valve, preferably as a regulating valve (7).

14. A heating and/or cooking equipment according to Claim 12, characterized in that the regulating valve (7) is constructed like a stopcock.

15. A heating and/or cooking equipment according to Claim 14, characterized in that the heat tube (6) possesses a valve section (21) the passage cross-section of which is adjustable, and the wall of the heat tube (6) in the valve section (21) preferably consists of elastic material.

16. A heating and/or cooking equipment according to one of Claims 1 to 15, characterized in that an electrical or electronic control appliance (22) is provided for the control unit (7).

17. A heating and/or cooking equipment according to Claim 16, characterized in that the control unit that is constructed as a valve can be opened and closed in pulse-like manner by means of the control appliance.

18. A heating and/or cooking equipment according to one of Claims 1 to 17, characterized in that the heating unit is formed by the upper end of a heat tube sloping upwards from a solar collector or the like towards the heat storage block, that an individual control unit is provided for the heat transport output of this heat tube, that by means of the control unit the flow of steam and/or liquid in this heat tube can be controlled, and that the control unit is preferably located near to the heat storage block, particularly in the insulation surrounding the heat storage block.

**Revendications**

1. Dispositif de chauffage et/ou de cuisson, comprenant un bloc d'accumulation de chaleur (2) entouré d'une isolation thermique (1), un élément de chauffe (3) dans le bloc d'accumulation de chaleur (2), au moins un consommateur de chaleur (5) éventuellement encastré dans l'isolation (1), par exemple une plaque de cuisson, un four, un radiateur, un ustensile de cuisson, et un tube échangeur de chaleur (6) incliné vers le haut qui est amené du bloc d'accumulation de chaleur (2) vers le consommateur de chaleur (5) en traversant l'isolation (1), caractérisé en ce que le tube échangeur de chaleur (6) est séparé en deux canaux, à savoir un canal aller (8) permettant seulement un écoulement de la vapeur vers le haut et un canal de retour (9) sensiblement parallèle audit canal aller et permettant uniquement un écoulement du liquide vers le bas, la séparation du tube échangeur de chaleur (6) en canal aller (8) et canal de retour (g) intervenant encore dans le bloc d'accumulation de chaleur (2), mais seulement peu au-dessous de l'isolation (1); que, pour la répartition du courant de vapeur vers le haut sur le canal aller (8) et du courant de liquide vers le bas sur le canal de retour (9), la branche du tube échangeur de chaleur (6) reliant le canal aller (8) au canal de retour (9) descend du point le plus élevé du canal aller (8) vers le canal de retour (9); et/ou la section de passage du canal de retour (9) est petite par rapport à la section de passage du canal aller (8); que le courant de vapeur/liquide dans le tube échangeur de chaleur (6) et par conséquent la capacité de transport de chaleur dudit tube échangeur de chaleur (6) peuvent être commandés au moyen d'un organe de commande (7); et que l'organe de commande (7) est disposé dans le canal aller (8) ou, de préférence, dans le canal de retour (9).

2. Dispositif de chauffage et/ou de cuisson selon la revendication 1, caractérisé en ce que, pour la répartition du courant de vapeur vers le haut sur le canal aller (8) et du courant de liquide vers le bas sur le canal de retour (9), il est prévu des clapets antiretour (10, 11) correspondants, des déflecteurs, des filtres ou analogues.

3. Dispositif de chauffage et/ou de cuisson selon la revendication 1, caractérisé en ce que la section de passage du canal de retour (9) est d'environ 5 à 9 mm², de préférence environ 7 mm², et qu'elle présente respectivement un diamètre d'environ 3 à 4 mm, de préférence environ 3 mm.

4. Dispositif de chauffage et/ou de cuisson selon l'une quelconque des revendications 1 à 3, caractérisé en ce que l'organe de commande (7) est disposé directement sous le consommateur de chaleur (5), de préférence encore dans l'isolation (1).

5. Dispositif de chauffage et/ou de cuisson selon l'une quelconque des revendications 1 à 4, caractérisé en ce que l'extrémité du tube échangeur de chaleur (6) dirigée vers le consommateur de chaleur (5) et associée à celui-ci est conduite dans une boucle (15).

6. Dispositif de chauffage et/ou de cuisson selon l'une quelconque des revendications 1 à 5, caractérisé en ce que l'extrémité du tube échangeur de chaleur (6) dirigée vers le consommateur de chaleur (5) et associée à celui-ci est intégrée dans une plaque (16) représentant elle-même le consommateur de chaleur (5), de préférence venue de fonderie avec une plaque (16) en aluminium.

7. Dispositif de chauffage et/ou de cuisson selon l'une quelconque des revendications 1 à 6, caractérisé en ce que le tube échangeur de chaleur (6) est réalisé en cuivre.

8. Dispositif de chauffage et/ou de cuisson selon l'une quelconque des revendications 1 à 7, caractérisé en ce qu'une spirale (6a) ou analogue favorisant un reflux du liquide est disposée sur la paroi intérieure du tube échangeur de chaleur (6).

9. Dispositif de chauffage et/ou de cuisson selon l'une quelconque des revendications 1 à 8, caractérisé en ce que le tube échangeur de chaleur (6) est raccordé, dans la région située à l'intérieur du bloc d'accumulation de chaleur (2), à au moins une tôle d'absorption de chaleur (6b) ou analogue s'étendant avec une grande surface dans le bloc d'accumulation de chaleur (2).

10. Dispositif de chauffage et/ou de cuisson selon l'une quelconque des revendications 1 à 9, caractérisé en ce que le consommateur de chaleur (5) est réalisé sous la forme d'une unité séparée du bloc d'accumulation de chaleur (2) avec l'isolation (1) et reliée audit bloc d'accumulation de chaleur (2) par l'intermédiaire du tube échangeur de chaleur (6).

11. Dispositif de chauffage et/ou de cuisson selon la revendication 10, caractérisé en ce que le bloc d'accumulation de chaleur (2), y compris l'isolation (1), présente au moins une ouverture (19) pour l'engagement du tube échangeur de chaleur (6) et que ledit tube échangeur de chaleur (6) peut être introduit dans ladite ouverture (19).

12. Dispositif de chauffage et/ou de cuisson selon l'une des revendications 10 ou 11, caractérisé en ce que le consommateur de chaleur (5) est conformé en ustensile de cuisson à l'eau, ustensile pour rôtir ou similaire et qu'il est muni d'une ouverture (20) pour l'introduction de l'extrémité associée du tube échangeur de chaleur (6).

13. Dispositif de chauffage et/ou de cuisson selon l'une quelconque des revendications 1 à 12, caractérisé en ce que l'organe de commande est conformé en soupape, de préférence en vanne-pilote (7).

14. Dispositif de chauffage et/ou de cuisson selon la revendication 12, caractérisé en ce que la vanne-pilote (7) est conformée en robinet.

15. Dispositif de chauffage et/ou de cuisson selon la revendication 14, caractérisé en ce que le tube échangeur de chaleur (6) comprend une section de soupape (21) dont la section de passage est réglable et que, dans la section de soupape (21), la paroi du tube échangeur de chaleur (6) est constituée d'un matériau élastique.

16. Dispositif de chauffage et/ou de cuisson selon l'une quelconque des revendications 1 à 15, caractérisé en ce qu'un dispositif de commande électrique et respectivement électronique (22) est prévu pour l'organe de commande (7).

17. Dispositif de chauffage et/ou de cuisson selon la revendication 16, caractérisé en ce que l'organe de commande (7) conformé en soupape peut être ouvert et fermé par impulsions au moyen du dispositif de commande (22).

18. Dispositif de chauffage et/ou de cuisson selon l'une quelconque des revendications 1 à 17, caractérisé en ce que l'élément de chauffe (3) est constitué par l'extrémité supérieure d'un tube échangeur de chaleur montant d'un collecteur solaire ou analogue vers le bloc d'accumulation de chaleur; qu'il est prévu pour ledit tube échangeur de chaleur un organe de commande particulier pour la capacité de transport de chaleur; que l'écoulement de la vapeur/du liquide dans ledit tube échangeur de chaleur peut être commandé au moyen dudit organe de commande; et que l'organe de commande est disposé de préférence à proximité du bloc d'accumulation de chaleur, en particulier dans l'isolation entourant ledit bloc d'accumulation de chaleur.

Fig.1

Fig.2

## Fig. 3

# Fig.4

# Fig. 5